# EUROPEAN PATENT APPLICATION

(11) **EP 1 788 243 A1**
(43) Date of publication of application: **23.05.2007**
(21) Application number: 04748560.2
(22) Date of filing: 30.06.2004
(51) Int. Cl.: F03G 3/00

(54) **TORQUE MULTIPLIER**

(30) Priority: 28.06.2004 MX PA04006381
(71) Applicant: Gil Aldrete, Fernando Manuel, Edo. de Méx, C.P. 54875 (MX)
(72) Inventor: Gil Aldrete, Fernando Manuel, Edo. de Méx, C.P. 54875 (MX)
(74) Representative: Carpintero Lopez, Francisco
(86) International application number: PCT/MX2004/000041
(87) International publication number: WO 2006/001686

(57) **Abstract**

Apparatus comprised of two cross-shaped pieces with four arms arranged at 900 angles, assembled by pairs, aligned, separated apart and in a parallel position, with a central bore into which a motor shaft is connected to be the rotation axis of the entire apparatus. At the 90<' spaces bounded by said four arms of the cross-shaped pieces, four rectangular pieces are connected which, upon rotation of the entire apparatus, produce centrifugal force. Said rectangular pieces work as levers, with their fulcrum on the rotation axis and with the centrifugal force applied on the pairs of arms in the parallel position of the cross-shaped pieces, to which said rectangular levers are connected, and following the same rotation direction, which results in a torque increase.

## Description

### DESCRIPTION OF THE PARTS COMPRISING THIS INVENTION

### FIGURE 1/4

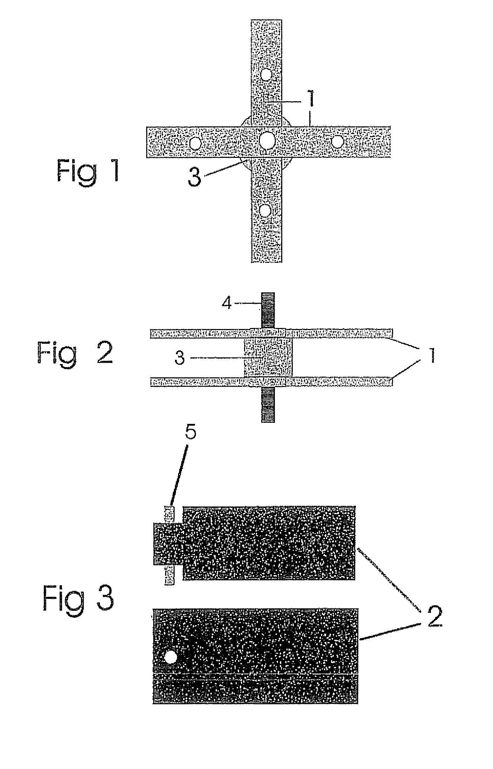

In this illustration, the Figure 1 represents a cross-shaped piece at 90°, with a central bore; two pieces of this kind will be used. These pieces are armed in a parallel position (see Figure 2) separated apart and fixed by means of a piece (3) having a bore aligned with the central bores of the cross-shaped pieces, in these bores a shaft (4) is firmly placed, with this shaft (4) being the rotation axis of the entire torque multiplier;

Figure 3 represents a rectangular piece in a frontal and profile (2) positions; with one of the ends of said pieces having a recess provided with a bore w herein a bolt (5) is received. Four pieces of this kind will be used to construct this invention. In order to make the disclosure easy they will be referred to as levers (2).

### FIGURE 2/4

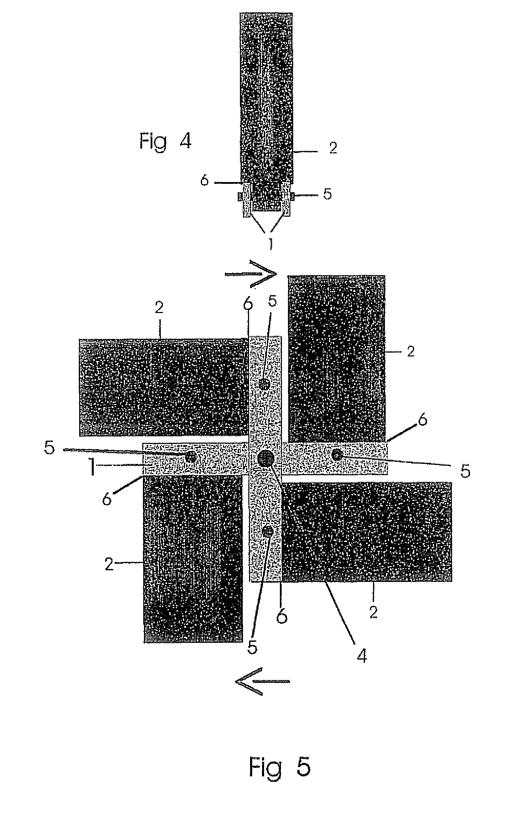

In Figure 4 is disclosed one of said four levers (2) which are installed between s aid two parallel pieces (1) by means of said bolt (5), and shows in detail how they become supported at the site (6) of the edge of said parallel pieces (1).

Figure 5 shows in a front view the invention already assembled, with said four levers (2) arranged between said two parallel pieces (1) by means of said bolts (5). It is to be clearly understood that this bolt (5) must be at the center of the recess of said levers (2) (see illustration 1/4 Figure 3) and into a central bore of the parallel arms of the cross-shaped pieces (1), wherein each of said four levers will become connected. Said four levers (2) are supported on the edge of the cross-shaped pieces; see the site (6) from Figures 4 and 5.

### FIGURE 3/4

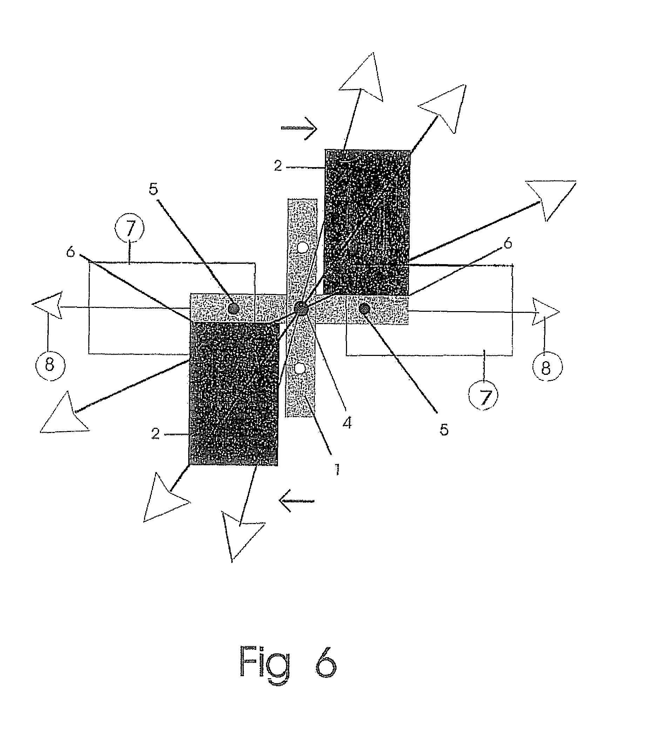

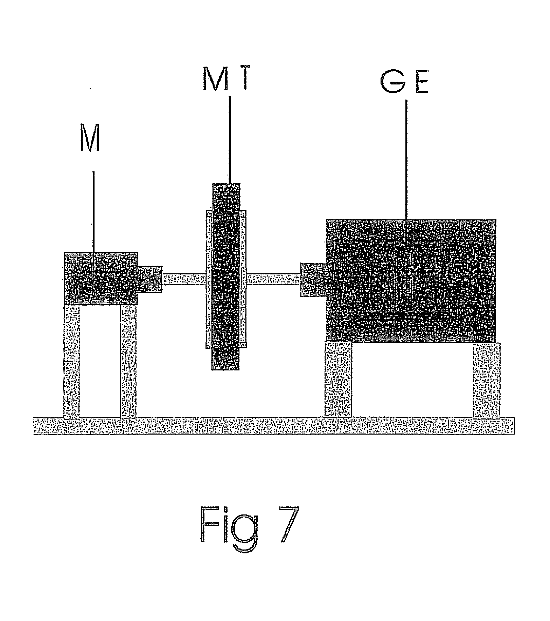

In order to explain the operation of this invention the attention is called to Figure 6, in this illustration we consider that the apparatus makes a clockwise rotation; said levers (2) arranged between said cross-shaped parallel pieces (1) by means of the bolt (5), acquire upon rotation of the entire apparatus about the shaft (4), centrifugal force (see arrows) whereby their masses obtain a strong drive to be displaced following the same rotation direction, see the site (7), this reference numeral illustrates in an imaginary manner, the position to which said levers (2) would become displaced due to centrifugal force, placing its masse in parallel position to the cross-shaped pieces in which they are installed, by means of bolt (5) see arrow (8). This drive of the levers (2) to rotate and displaced in the rotation direction cannot happen because when the levers (2) are rested on the parallel pieces edge, they cannot rotate, (see the site 6 Figure 4) and, if it is converted into pressure over the edges of the same parallel pieces in which the levers (2) are rested and fixed, producing a strong torque pressure on the rotation axis (4) which is increased when the speed increase without for this speed increase may be necessary a higher energy consume, because by increase the speed, the torque pressure of the four levers is increased in the same rotation direction, this torque increase which increase with the speed, results to much higher than the motor nominal torque which may be used to place all in motion.

When all the matter acquire speed, its masse increase, understanding as masse increase a weight increase of the object, in such a way that when acquire speed by rotate all the device. The levers (2) increase its weight and increasing its weight, increase its centrifugal force which is applied as strong pressure over the parallel pieces ends in the site (6) and in the same rotation direction of the entire device, resulting in a torque increase.

### FIGURE 4/4

Figure (7), in this illustration is described an example of the industrial application that may be given this invention which is named TORQUE MULTIPLIER, representing letter (M) a motor with appropriate capacity to rotate with a torque multiplier installed on the rotation axis (MT). This multiplier increases the torque pressure that the motor alone would have, by this torque increase, it is possible to rotate an electric energy generator (GE) with higher capacity than the necessary to the motor that place all in motion, obtaining an electric energy excess that may be used to other applications.

## Claims

1. Formed from two cross-shaped pieces with four equal arms arranged at 90° angles and with a central bore, so aligned that eight arms are formed by pairs and in a parallel separated apart position, and connected by means of a piece at the central bore, aligned with said central bores of said two cross-shaped pieces, in such a manner that in said bores a shaft may be installed in fixed position, that become the rotation axis of the entire apparatus

2. The arms in pairs of the two cross-shaped pieces at 90°, form four angles of 90°, with the apex of the four angles being very close of the rotation axis, giving the characteristic of four free spaces in the area forming the apex of 90° and the arms of the cross-shaped pieces; placing four pieces in this space.

3. Said four pieces are in rectangular shape, **characterized by** lever effect and are installed in the following manner: assuming the devise rotates clockwise, we consider that an arm, pair of cross-shaped pieces points out at 12 o'clock, the following pair arm clockwise, points out at 3 forming an angle of 90° with the apex very close to the rotation axis, placing in this space one of the four rectangular levers and only fixing in the arms of the cross-shaped pieces which pointed out at 3. It is to be clearly understood that this rectangular piece making the lever effect, will not must to be fixed in the arm pointing out at 12, if the devise is rotated at 90°, then the arms of the cross-shaped pieces which pointed out at 12, now point out at 3, thereby it is possible to fix in this cross-shaped pieces arm, other lever and so, until to place the four levers which only will be fixed in an unique pair of arms of the cross-shaped pieces

4. This invention rotates on its own axis by any known means, or may be installed directly on the rotation axis of a motor

5. The four rectangular pieces described in item 3 which occupied the 90° spaces delimited by the arms of the cross-shaped pieces, are **characterized in that** they produce centrifugal force when the entire devise is rotated, this centrifugal force, is applied in lever manner making pressure in the same rotation direction on the arms pair of the parallel cross-shaped pieces in which the four pieces are fixed resulting in a torque increase.

6. The material used in its manufacturing, the parts sizes and proportions, may be varying, without modify by this the exclusive ownership of this patent.

7. The four pieces so-called levers installed on a pair of arms positioned parallel to said cross-shaped pieces, can become positioned perpendicular to these pieces to which are connected, or at some other pitch, and they can be rectangular, irregular or with a combination of straight portions and curves, with this meaning no modification on the exclusive property of this patent.
